# EUROPEAN PATENT SPECIFICATION

(11) **EP 4 471 680 B1**
(45) Date of publication and mention of the grant of the patent: **24.06.2026**
(21) Application number: 24178044.4
(22) Date of filing: 24.05.2024
(51) Int. Cl.: G06Q 10/02, F24F 11/52

(54) **SYSTEMS AND METHODS FOR MANAGING ALLOTMENT OF ROOMS BASED ON INDOOR AIR QUALITY**
SYSTEME UND VERFAHREN ZUR VERWALTUNG DER ZUTEILUNG VON RÄUMEN AUF BASIS DER RAUMLUFTQUALITÄT
SYSTÈMES ET PROCÉDÉS DE GESTION D'ATTRIBUTION DE PIÈCES SUR LA BASE DE LA QUALITÉ DE L'AIR INTÉRIEUR

(30) Priority: 30.05.2023 US 202363504979 P
(43) Date of publication of application: 04.12.2024
(73) Proprietor: Carrier Corporation, Palm Beach Gardens, FL 33418 (US)
(72) Inventor: ATLURI, Sriram, Hyderabad (IN)
(74) Representative: Dehns

(56) References cited:
- WO-A1-2021/146106
- US-A1- 2016 116 181
- US-A1- 2021 356 153

## Description

### FIELD OF THE INVENTION

The disclosure generally relates to indoor air quality (IAQ) systems, and more particularly relates to systems and methods for managing allotment of rooms on the basis of IAQ of the rooms.

### BACKGROUND

Current room management systems are known to allot rooms to customers looking for accommodation. The room management systems are utilized by hotels, guest houses, lodges, and the like for allotting available rooms to their customers. Used rooms are cleaned by maintenance staff prior to allotting the room to the next customer. The cleaning may be performed based on pre-set maintenance schedules.

However, cleaning rooms based on maintenance schedules does not ensure healthy indoor air quality of the rooms, which may result in an unpleasant customer experience. Conventional room management systems and the staff using the room management systems, do not consider indoor air quality at the time of allotting rooms to customers. Improper indoor air quality may affect the health of the customers living in the room. As an example, invisible molds may grow in the rooms which may not be cleaned by normal cleaning. As another example, high concentration of harmful gases, such as carbon dioxide and/or formaldehyde, may be harmful to the health of the customers.

Therefore, it would be advantageous to provide a solution that can overcome the above-discussed problems.

US 2016/116181 A1 discloses an indoor air quality (IAQ) sense and control system. The IAQ system includes a plurality of air quality sensor modules configured to sense IAQ parameters and remotely located within a structure. The IAQ system also includes an IAQ control hub including a communication interface communicatively coupling the IAQ control hub to the plurality of air quality sensor modules. The IAQ system also comprises a memory holding instructions that cause a processor to receive the IAQ parameters from the plurality of air quality sensor modules and if one of the IAQ parameters is outside a predetermined IAQ parameter range corresponding to the one of the IAQ parameters, request adjustment of control settings of a heating, ventilation, and air conditioning (HVAC) system to shift indoor air quality toward the predetermined IAQ parameter range. WO 2021/146106 A1 discloses obtaining air quality information from a room. US 2021/0356153 A1 discloses a building system with flexible facility operation.

### SUMMARY

This summary is provided to introduce a selection of concepts, in a simplified format, that are further described in the detailed description of the disclosure. This summary is neither intended to identify key or essential inventive concepts of the disclosure and nor is it intended for determining the scope of the disclosure.

According to a first aspect of the invention there is provided a method for managing allotment of rooms based on indoor air quality (IAQ) according to claim 1.

According to a second aspect of the invention there is provided a system to manage allotment of rooms based on indoor air quality (IAQ) according to claim 10.

To further clarify the advantages and features of the methods, systems, and apparatuses, a more particular description of the methods, systems, and apparatuses will be rendered by reference to specific embodiments thereof, which are illustrated in the appended drawings. It is appreciated that these drawings depict only typical embodiments of the disclosure and are therefore not to be considered limiting of its scope. The disclosure will be described and explained with additional specificity and detail with the accompanying drawings.

### BRIEF DESCRIPTION OF THE DRAWINGS

These and other features, aspects, and advantages of the disclosure will become better understood when the following detailed description is read with reference to the accompanying drawings in which like characters represent like parts throughout the drawings, wherein:
**Figure 1** illustrates a system environment for managing allotment of rooms based on indoor air quality;
**Figure 2** illustrates a schematic block diagram of the system for managing allotment of rooms based on indoor air quality;
**Figure 3** illustrates a process flow chart depicting a method for managing allotment of rooms based on indoor air quality;
**Figure 4** illustrates an additional process flow chart depicting a method for managing allotment of rooms based on indoor air quality;
**Figure 5** illustrates another additional process flow chart depicting a method for managing allotment of rooms based on indoor air quality; and
**Figures 6A-6C** illustrate non-limiting examples of methods for managing allotment of rooms based on the IAQ of the rooms.

Further, skilled artisans will appreciate that elements in the drawings are illustrated for simplicity and may not have necessarily been drawn to scale. For example, the flow charts illustrate the method in terms of the most prominent steps involved to help to improve understanding of aspects of the disclosure. Furthermore, in terms of the construction of the device, one or more components of the device may have been represented in the drawings by conventional symbols, and the drawings may show only those specific details that are pertinent to understanding the embodiments of the disclosure so as not to obscure the drawings with details that will be readily apparent to those of ordinary skill in the art having the benefit of the description herein.

### DETAILED DESCRIPTION

For the purpose of promoting an understanding of the principles of the disclosure, reference will now be made to the various embodiments and specific language will be used to describe the same. It will nevertheless be understood that no limitation of the scope of the disclosure is thereby intended, such alterations and further modifications in the illustrated system, and such further applications of the principles of the disclosure as illustrated therein being contemplated as would normally occur to one skilled in the art to which the disclosure relates.

It will be understood by those skilled in the art that the foregoing general description and the following detailed description are explanatory of the disclosure and are not intended to be restrictive thereof.

Reference throughout this specification to "an aspect", "another aspect" or similar language means that a particular feature, structure, or characteristic described in connection with the embodiment is included in at least one embodiment of the disclosure. Thus, appearances of the phrase "in an embodiment", "in another embodiment", "some embodiments", "one or more embodiments" and similar language throughout this specification may but do not necessarily, all refer to the same embodiment.

The terms "comprises", "comprising", or any other variations thereof, are intended to cover a non-exclusive inclusion, such that a process or method that comprises a list of steps does not include only those steps but may include other steps not expressly listed or inherent to such process or method. Similarly, one or more devices or sub-systems or elements or structures or components proceeded by "comprises... a" does not, without more constraints, preclude the existence of other devices or other sub-systems or other elements or other structures or other components or additional devices or additional sub-systems or additional elements or additional structures or additional components.

In addition to overcoming the challenges related to room allotment based on indoor air quality to prevent a negative effect on a user's health, the disclosure provides for a system that monitors the indoor air quality of rooms, based on multiple parameters, and facilitates actions to keep the indoor air quality in a suitable range that is not harmful to a user. The system prevents allotment of rooms in case the indoor air quality is not suitable and unhealthy. Once the actions are taken to bring the indoor air quality to a suitable range, the system facilitates allotment of the rooms. Accordingly, user experience as well as the health of users is not affected.

Embodiments of the disclosure will be described below in detail with reference to the accompanying drawings.

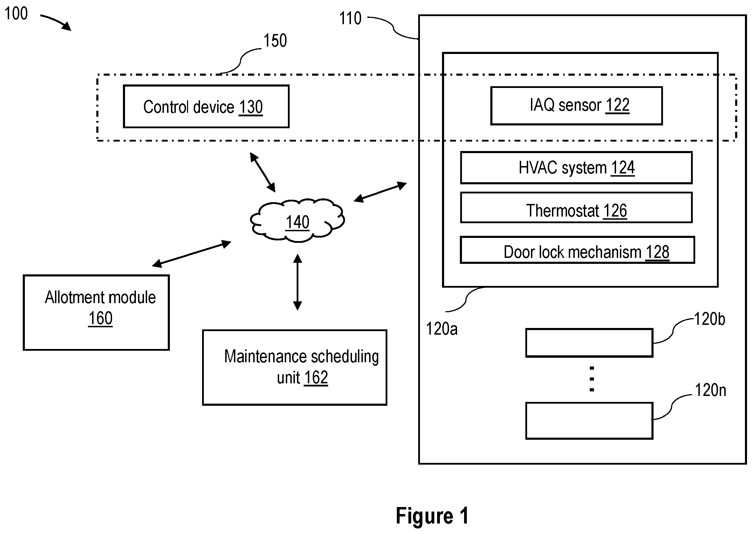

**Figure 1** illustrates a system environment 100 for managing the allotment of rooms based on indoor air quality (IAQ) of the rooms.

The system environment 100 may include an indoor area/environment 110 comprising a plurality of rooms 120a-120n (interchangeably referred to as "120" hereinafter). The indoor area 110 may be associated with a hotel, a lodge, a guest house, and/or any other establishment providing accommodation to users. The plurality of rooms 120a-120n may include rooms that may be allotted to users looking for accommodation. Each room of the plurality of rooms 120a-120n may be associated with an IAQ sensor 122 configured to detect the quality of indoor air within the room 120. A person skilled in the art would understand that the details explained with respect to one room 120 may be equally applicable for each of the plurality of rooms 120a-120n, without deviating from the scope of the disclosure. Further, the terms "allot" and "allocate" may be used interchangeably in the disclosure.

In some embodiments, the IAQ sensor 122 within the room 120 may be configured to detect various air quality parameters, such as, but not limited to, carbon dioxide (CO2), indoor air formaldehyde (HCHO), particulate matter (PM), volatile organic compounds (VOCs), and polycyclic aromatic hydrocarbons (PAHs). In some embodiments, the IAQ sensor 122 may be configured to detect various particulate matters, such as, but not limited to, PM1, PM2.5, PM4, and PM10. In some embodiments, the IAQ sensor 122 may be configured to detect an odour in the room 120. For instance, the IAQ sensor 122 may be integrated with an odour sensor (not shown) configured to detect the odour in the room 120. The odour of the room may thus be considered as an air quality parameter along with the various other air quality parameters detected by the IAQ sensor 122. In some embodiments, the odour sensor may be a separate component standalone in the room 120 or integrated with a thermostat in the room 120 and may be configured to detect the odour in the room.

In some embodiments, the room 120 may be associated with a heating, ventilation, and air conditioning (HVAC) system 124. In some embodiments, HVAC system 124 may comprise a ventilation mechanism configured to provide ventilation to the room 120. For instance, the HVAC system 124 may allow the removal of air from the room 120 and the flow of fresh conditioned air into the room 120. In some embodiments, the ventilation mechanism of the HVAC system 124 may comprise a fan and condenser unit, an evaporator coil unit, and a ductwork arrangement for allowing ventilation of the room 120.

In some embodiments, the room 120 may be associated with a thermostat 126. In some embodiments, the thermostat 126 may be configured to control the HVAC system 124, and the related components, associated with the room 120. According to the claimed invention, the room 120 is associated with a door lock mechanism 128 configured to lock and unlock a door associated with the room.

The IAQ sensor 122, the HVAC system 124, the thermostat 126, and the door lock mechanism 128 may be communicatively connected with a control device 130 over a communication network 140, as discussed below herein throughout the disclosure. The control device 130 may be configured to manage allotment of the room 120, as well as other rooms of the plurality of rooms 120a-120n, based on the sensed IAQ of the corresponding rooms. Further, the IAQ sensor 122, the HVAC system 124, the thermostat 126, and the door lock mechanism 128 may be communicatively connected to each other over the communication network 140. For instance, in one embodiment, the IAQ sensor 122 may be in communication with the control device 130 to provide readings related to the indoor air quality of the room 120 to the control device 130.

The IAQ sensor 122 and the control device 130 may form a system 150 for managing the allotment of rooms to users. In some embodiments, the system 150 may additionally comprise one or more of the thermostat 126, the HVAC system 124, and the door lock mechanism 128. In some embodiments, the control device 130 may be a server-based device that is remote to the indoor area 110. In some embodiments, the control device 130 may be a cloud-based device. In some embodiments, the control device 130 may be integrated with the thermostat 126 and the functionalities of the control device 130 may be provided through the thermostat 126, and thus, the thermostat 126 may form part of the system 150 in such embodiments. In some embodiments, one or more components of the control device 130 may be provided on cloud while one or more components of the control device 130 may be provided on a server or thermostat.

In some embodiments, the system environment 100 may include an allotment module 160 in communication with the system 150, in particular, the control device 130 of the system 150. The allotment module 160 may be configured to receive instructions related to the allotment of rooms from the control device 130. In some embodiments, the allotment module 160 may be associated with a room management system and/or a front desk system that may be configured to facilitate the allotment of rooms to users. In some embodiments, the system environment 100 may include a maintenance scheduling unit 162 in communication with the system 150, in particular, the control device 130 of the system 150. The maintenance scheduling unit 162 may be configured to generate maintenance alerts for one or more maintenance staff, thereby facilitating the maintenance of the plurality of rooms within the indoor area 110. In some embodiments, the allotment module 160 and/or the maintenance scheduling module 162 may be implemented on hardware on-site, i.e., at the indoor area 110. For instance, the indoor area 110 may comprise a reception space and the allotment module 160 and/or the maintenance scheduling module 162 may be implemented in hardware located at the reception space. In some embodiments, the allotment module 160 and/or the maintenance scheduling module 162 may be implemented remotely, such as, via a cloud-based network. In some embodiments, the functionalities associated with allotment module 160 and/or the maintenance scheduling module 162 may be provided via a handheld device associated with allotment staff or maintenance staff.

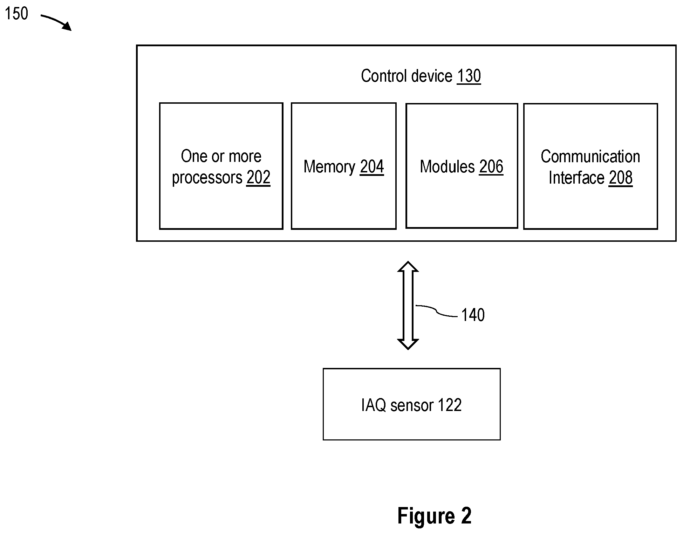

**Figure 2** illustrates a schematic block diagram of the system 150 for managing the allotment of rooms in the indoor area 110.

As shown in Figure 2, the system 150 comprises at least the control device 130 and the IAQ sensor 122. It is appreciated that although a single IAQ sensor 122 is depicted in Figure 2, the control device 130 may be in communication with multiple IAQ sensors associated with other rooms, and the details provided with respect to IAQ sensor 122 are equally applicable for other IAQ sensors in other rooms.

In one or more embodiments, the control device 130 may comprise one or more processors 202, a memory 204, one or more modules 206, and a communication interface 208.

The one or more processors 202 may be configured to communicate with the memory 204 to store IAQ-related data, such as sensed readings from the IAQ sensor 122, for managing the allotment of rooms based on indoor air quality. In one or more embodiments, the one or more processors 202 may be one or more microprocessor(s) or microcontroller(s). The one or more processors 202 may include one or a plurality of processors, may include one or more general-purpose processors, such as a central processing unit (CPU), an application processor (AP), or the like, a graphics-only processing unit such as a graphics processing unit (GPU), a visual processing unit (VPU), and/or an Artificial intelligence (AI) dedicated processor such as a neural processing unit (NPU).

In some embodiments, the memory 204 may store data and instructions executable by the processor(s) 202 to perform the method steps for managing the allotment of rooms, as discussed herein throughout the disclosure. The memory 204 may further include, but is not limited to, a non-transitory computer-readable storage media such as various types of volatile and non-volatile storage media, including but not limited to, random access memory, read-only memory, programmable read-only memory, electrically programmable read-only memory, electrically erasable read-only memory, flash memory, magnetic tape or disk, optical media and the like. Further, the non-transitory computer-readable storage media of the memory 204 may include executable instructions in the form of the modules 206 and a database to store data. The modules 206 may include a set of instructions that may be executed to cause the one or more processors 202 to perform any one or more of the methods for managing allotment of rooms based on indoor air quality, as disclosed herein throughout the disclosure. Specifically, the one or more modules 206 may be configured to perform the steps of the disclosure using the data stored in the database of the memory 204 for managing allotment of rooms based on indoor air quality. In another embodiment, the modules 206 may be one or more hardware units that may be outside the memory 204. In one embodiment, the memory 204 may communicate via a bus within the processor(s) 202.

In one or more embodiments, the communication interface 208 may include a transmitter and a receiver, and may be configured to communicate with the IAQ sensor 122, via the communication network 140. In some embodiments, the communication interface 208 may be configured to communicate with one or more of the thermostat 126, the HVAC system 124, and the door lock mechanism 128, via the communication network 140. The communication via the communication network 140 may be based on a wireless communication protocol. The communication interface 208 may be configured for communicating internally between internal hardware components and with external devices, e.g., the IAQ sensor 122, via one or more networks (e.g., radio technology). The communication interface 208 may include an electronic circuit specific to a standard that may enable wireless communication.

Referring to Figures 1 and 2, the one or more processors 202 may be configured to manage the allotment of rooms based on indoor air quality. The one or more processors 202 may be further configured to detect, for the room 120, a current IAQ based on the IAQ sensor 122 positioned within the room 120. The current IAQ of the room 120 may be indicative of the status of the indoor air within the room 120. The current IAQ may be detected based on multiple IAQ parameters, such as, but not limited to, carbon dioxide (CO2), indoor air formaldehyde (HCHO), particulate matter (PM), volatile organic compounds (VOCs), and polycyclic aromatic hydrocarbons (PAHs), odor, and the like.

In some embodiments, the one or more processors 202 of the control device 130 may be configured to receive one or more sensor readings from the IAQ sensor 122. The sensor readings received from the IAQ sensor 122 may relate to the multiple IAQ parameters, such as, CO2, HCHO, PM 1, PM 2.5, PM 4, PM 10, odour, and the like. In some embodiments, readings related to the odour in the room 120 may be received based on the odour sensor integrated with the IAQ sensor 122. In some embodiments, the one or more processors may be configured to receive related to odour from another odour sensor located within the room 120. Based on the sensor readings received from the IAQ sensor 122, the one or more processors 202 may determine the current IAQ of the room 120.

In some embodiments, the current IAQ of the room 120 may be determined based on any one of the multiple IAQ parameters. In some embodiments, the current IAQ of the room 120 may be determined based on a combination of one or more of the multiple IAQ parameters. A skilled person would understand that the current IAQ of the room 120 is indicative of the quality of indoor air of the room 120 based on the amount of contaminants, i.e., IAQ parameters present in the room 120. Further, a skilled person would understand that, in the context of the disclosure, reducing the current IAQ may indicate reducing the amount of contaminants or the concentration of contaminants in the room. Thus, reduction of the current IAQ may indicate an increase in air quality in the context of the disclosure.

In some embodiments, the one or more processors 202 of the control device 130 may be configured to determine whether the current IAQ of the room 120 exceeds a predetermined threshold value. In some embodiments, the predetermined threshold value may relate to a level of air quality of the room 120, which when exceeded, indicates an undesirable air quality for the room rendering the room 120 unsuitable for allocating to a user. That is, the predetermined threshold value may be indicative of an IAQ value, below which allotment of the room to a customer may be acceptable. The one or more processor 202 may be configured to determine that the current IAQ exceeds the predetermined threshold value when the current IAQ reaches the predetermined threshold value and/or crosses the predetermined threshold value.

In some embodiments, each of the IAQ parameters may be associated with a respective parameter threshold limit. In non-limiting examples, the parameter threshold limit for PM 2.5 may be between 0-12 ug/m3, the parameter threshold limit for PM 10 may be between 0-54 ug/m3, the parameter threshold limit for VOCs may be between 0-15 ppm, the parameter threshold limit for CO2 may be between 400-650ppm, the parameter threshold limit for HCHO may be between 0-0.2 ppm, and the parameter threshold limit for PAHs may be between 0-10 ppm.

In some embodiments, the respective parameter threshold limits for the IAQ parameters may be pre-set and stored in the memory 204. In some embodiments, the respective parameter threshold limits may be specific to the room 120, and the respective parameter threshold limit may be different for different rooms. For instance, the respective parameter threshold limit may vary based on a category of the plurality of rooms. The category of the plurality of rooms may be associated with sizes, interiors, and other facilities associated with the plurality of rooms.

In some embodiments, the IAQ sensor 122 may be configured to sense the amount of contaminants, i.e., the IAQ parameters in the room 120 and provide the readings to the one or more processors 202. The one or more processors 202 may be configured to determine that the current IAQ of the room 120 exceeds the predetermined threshold value based on the respective parameter threshold limits of the IAQ parameters.

In some embodiments, the one or more processors 202 may be configured to determine that the current IAQ of the room 120 exceeds the predetermined threshold value when the one or more processors 202 determine, based on readings received from the IAQ sensor 122, that at least one of the IAQ parameter exceeds the respective parameter threshold limits. In some embodiments, the one or more processors 202 may be configured to determine that the current IAQ of the room 120 exceeds the predetermined threshold value in response to any one of the one or more of the IAQ parameters exceeding its respective parameter threshold limit. In some embodiments, the predetermined threshold value may be based on a combination of the respective parameter threshold limits of the IAQ parameters, and the one or more processors 202 may be configured to determine that the current IAQ of the room 120 exceeds the predetermined threshold value based on the combination of the respective parameter threshold limits of the various IAQ parameters.

The one or more processors 202 may be configured to perform one or more actions in response to the determination that the current IAQ exceeds the predetermined threshold value. In an embodiment, the one or more processors 202 may be configured to trigger a control action for the room 120 in response to the determination that the current IAQ exceeds the predetermined threshold value. In some embodiments, the one or more processors 202 may be configured to generate and send a room status change signal to the allotment module 160 in response to the determination that the current IAQ exceeds the predetermined threshold value.

In some embodiments, the one or more processors 202 may be in communication with the HVAC system 124, and the one or more processor 202 may be configured to trigger the control action by controlling the HVAC system 124 associated with the room 120. In an embodiment, the HVAC system 124 may comprise a ventilator mechanism, and the one or more processors 202 may be configured to activate the ventilator mechanism, thereby facilitating reducing the current IAQ of the room 120. In some embodiments, the one or more processors 202 may send an activation signal to the HVAC system 124 associated with the room 120, causing the HVAC system 124 to initiate the operation of the ventilator mechanism. Accordingly, ventilation of the room 120 may be achieved when the current IAQ of the room 120 exceeds the predetermined threshold value. The ventilation of the room 120 allows the current IAQ to fall back below the predetermined threshold value as a result of the ventilation. As described above, in the context of the disclosure, reducing the current IAQ may refer to reducing the concentration of IAQ parameters (contaminants) within the room. The ventilation of the room 120 via the HVAC system 124 thus allows reducing the contaminants present in the room 120.

According to the claimed invention, the one or more processors 202 is in communication with the door lock mechanism 128, and the one or more processors 202 is configured to trigger the control action by controlling the door lock mechanism 128 associated with the room 120. In some embodiments, the one or more processors 202 may send a lock signal to the door lock mechanism 128 associated with the room 120, causing the door lock mechanism 128 to lock the door of the room 120 and restricting access to the room 120. For instance, based on the readings from the IAQ sensor 122, the one or more processors 202 may determine a high concentration of one or more of the IAQ parameters within the room 120 causing the room 120 to be unsuitable for users as well as staff. The locking of the door thus prevents access to the room 120 in case of a high concentration of IAQ parameter(s) or the presence of a harmful IAQ parameter.

In some embodiments, the one or more processors 202 may be in communication with the maintenance scheduling unit 162, and the one or more processor 202 may be configured to trigger the control action by sending information related to the current IAQ of the room 120 to the maintenance scheduling unit 162. The maintenance scheduling unit 162 may be configured to generate, based on the current IAQ of the room 120, maintenance alerts for maintenance of the room 120. In some embodiments, the maintenance scheduling unit 162 may be associated with one or more maintenance staff, and the maintenance scheduling unit 162 may be configured to generate and send maintenance alerts to user devices associated with the one or more maintenance staff. In some embodiments, the maintenance scheduling unit 162 may be integrated with the allotment module 160.

In some embodiments, the maintenance alerts may be indicative of the current IAQ of the room 120 exceeding the predetermined threshold value, thereby facilitating the one or more maintenance staff to take action to reduce the IAQ of the room 120. For instance, upon receiving the maintenance alerts, the one or more maintenance staff may take action to ventilate the room 120, such as, by opening windows and/or doors associated with the room 120.

As described above, in some embodiments, the one or more processors 202 may be configured to generate and send a room status change signal to the allotment module 160 in response to the determination that the current IAQ of the room 120 exceeds the predetermined threshold value. The room status change signal may indicate that the room 120 is unavailable for allotment. The allotment module 160 may be associated with a room management system or a front desk system configured for allocating the room 120 to the users requiring accommodation. In some embodiments, the allotment module 160 may be configured to automatically allocate the room 120 to a user. In some embodiments, the allotment module 160 may be associated with one or more allotment staff and the allotment module 160 may be configured to facilitate the allocation of room 120 to a user.

In some embodiments, the allotment module 160 may be associated with a user interface allowing the allotment staff to view the allotment status of the plurality of rooms. The room status change signal sent by the one or more processors 202 may cause a change in the allotment status of the room 120 on the user interface of the allotment module 160, thereby preventing allotment of the room 120 to a user by blocking access to allot the room 120. For instance, the change in the allotment status of the room 120 may prevent the allotment staff to select the room 120 on the user interface of the allotment module 160 for allotting to a user. Accordingly, allotment of the room 120 may be prevented by the control device 130 once the control device 130 determines that the current IAQ of the room 120 has exceeded the predetermined threshold value, i.e., the air quality of the room is unsuitable for users.

In some embodiments, when the room 120 is unavailable for allotment to a particular user due to the current IAQ of the room 120 exceeding the predetermined threshold value, the one or more processors 202 may be configured to automatically allocate a different room of the plurality of rooms to the particular user. In some embodiments, the one or more processors 202 may allocate the different room independently or through the allotment module 160. The one or more processors 202 may allot a different room based on the current IAQ of the different room, in that, the one or more processors 202 may allot a different room having a suitable air quality for a user. Further, the one or more processors 202 may consider parameters such as the size of the room 120, facilities associated with the room 120 (such as, exterior view, interior infrastructure, etc.), and the like, and may allot a similar room from among the plurality of rooms to the particular user.

In some embodiments, the one or more processors 202 may be configured to determine a time duration for reducing the current IAQ of the room 120 below the predetermined threshold value. Based on the current IAQ of the room 120, and further based on whether a control action has been triggered for the room 120, the one or more processors 202 may determine the time duration. In some embodiments, the one or more processors 202 may be configured to determine the time duration based on one or more self-learning algorithms. For instance, the one or more processors 202 may consider the size of the room 120, the cubic feet per minute (CFM) requirement of fresh air, one or more characteristics of the HVAC system 124, the concentration of contaminants within the room, and use of additional components (such as, air purifiers, open windows, etc.), and the like in order to determine the time duration for reducing the current IAQ of the room 120 below the predetermined threshold value.

In some embodiments, the one or more processors 202 may be configured to cause the time duration to be displayed on one or more user interfaces, such as, but not limited to, the user interface associated with the allotment module 160, user interface disposed within the room (such as, user interface of the thermostat 126), a user interface associated with a handheld device of allotment staff or maintenance staff, and/or user interface associated with a handheld device of a user whom the room 120 may be allotted. In some embodiments, the one or more processors 202 may be configured to cause information related to the current IAQ of the room 120 to be displayed on the one or more user devices. Accordingly, the current IAQ of the room as well as the time duration for reducing the current IAQ of the room 120 below the predetermined threshold value may be monitored.

In some embodiments, the one or more processors 202 may be configured to determine that the time duration for reducing the current IAQ of the room 120 below the predetermined threshold value has lapsed. In response to determining that the time duration has lapsed, the one or more processors 202 may be configured to allocate the room 120 to a user. Accordingly, the control device 130 may determine the time duration when the room 120 would be suitable for allocating to a user, and once the time duration has lapsed, the one or more processors 202 may allocate the room 120 to the user. In some embodiments, the one or more processors 202 may allocate the room 120 independently. In some embodiments, the one or more processors 202 may facilitate allotment of the room 120 through the allotment module 160, for instance, by causing the allotment module to change the allotment status of the room 120 such that the room 120 is made available for allotment.

In some embodiments, the one or more processors 202 may be configured to determine whether the current IAQ of the room 120 has returned below the predetermined threshold value, for instance, post triggering of the control action. In some embodiments, the one or more processors 202 may be configured to receive readings from the IAQ sensor 122 at regular intervals and determine whether the current IAQ of the room 120 has returned below the predetermined threshold value. In some embodiments, in response to the determination that the current IAQ has returned below the predetermined threshold value, the one or more processors 202 may be configured to allocate the room 120 to a user.

In some embodiments, the one or more processors 202 may be configured to generate another room status change signal in response to the determination that the current IAQ returns below the predetermined threshold value. The another room status change signal may indicate that the room is available for allotment. In some embodiments, the another room status change signal may be sent to the allotment module 160. Upon receiving the another room status change signal, the allotment module 160 may change the allotment status of the room 120 such that the room 120 is made available for allotment. Thus, the room 120 may be allotted to a user, for instance by the allotment staff through the allotment module 160, once the current IAQ returns below the predetermined threshold value.

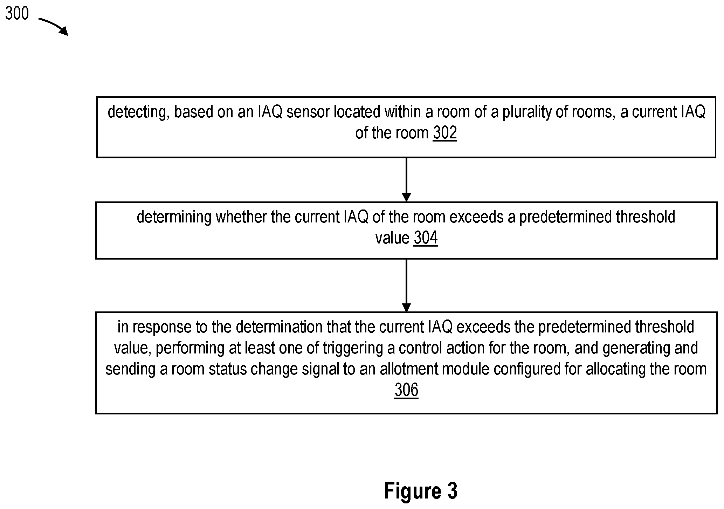

**Figure** 3 illustrates a process flow depicting a method 300 for managing the allotment of rooms based on the IAQ of the rooms. The method 300 may be described with reference to room 120, and a skilled person will appreciate that the method may be performed for each of the plurality of rooms 120a-120n in the indoor area 110.

At step 302, the method 300 comprises detecting the current IAQ of the room 120 based on the IAQ sensor 122 located within the room 120. In some embodiments, the current IAQ may be detected based on one or more IAQ parameters, such as, but not limited to, CO2, PM, VOCs, HCHO, PAHs, odour, and the like.

At step 304, the method 300 comprises determining whether the current IAQ of the room 120 exceeds the predetermined threshold value. In some embodiments, the current IAQ of the room 120 is indicative of the concentration of contaminants, i.e., IAQ parameters within the room 120, and an increase in current IAQ of the room 120 refers to an increase in the concentration of contaminants in the room 120 in the context of the disclosure.

At step 306, the method 300 comprises, in response to the determination that the current IAQ exceeds the predetermined threshold value, performing at least one of (a) triggering a control action for the room and (b) generating and sending a room status change signal to the allotment module 160 configured for allocating the room.

In some embodiments, the room status change signal indicates that the room is available for allotment. In some embodiments, the room status change signal may cause a change in the allotment status of the room on a user interface associated with the allotment module 160, thereby preventing the allotment of the room via the allotment module 160. In some embodiments, triggering the control action may comprise activating a ventilator mechanism of the HVAC system 124 associated with the room in order to reduce the current IAQ of the room 120. According to the claimed invention, triggering the control action comprises activating the door lock mechanism 128 associated with the room to restrict access to the room 120. In some embodiments, triggering the control action may comprise sending information related to the current IAQ to the maintenance scheduling unit 162 configured to generate a maintenance alert based on the current IAQ of the room 120.

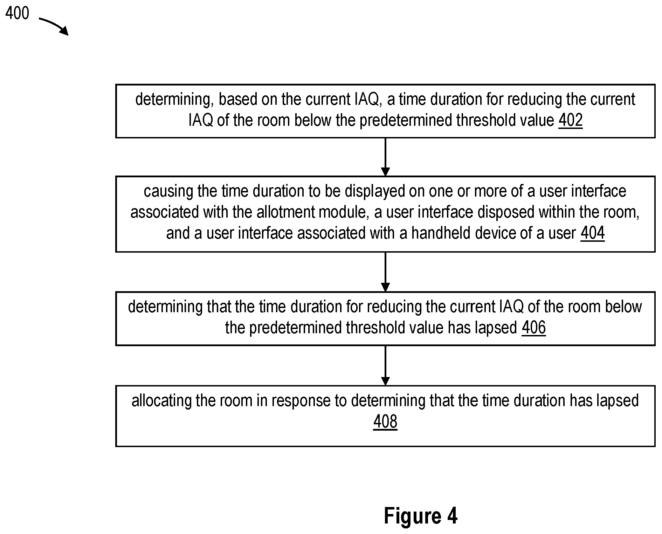

In some embodiments, the method 300 may comprise additional steps for managing the allotment of rooms based on the IAQ of the rooms. **Figure 4** illustrates an additional process flow depicting a method 400 that, at additional step 402, comprises determining, based on the current IAQ, a time duration for reducing the current IAQ of the room below the predetermined threshold value.

At additional step 404, the method 400 comprises causing the time duration to be displayed on one or more of a user interface associated with the allotment module 160, a user interface disposed within the room 120, and a user interface associated with a handheld device of a user or a staff member.

At additional step 406, the method 400 comprises determining that the time duration for reducing the current IAQ of the room below the predetermined threshold value has lapsed.

At additional step 408, the method 400 comprises allocating the room in response to determining that the time duration has lapsed.

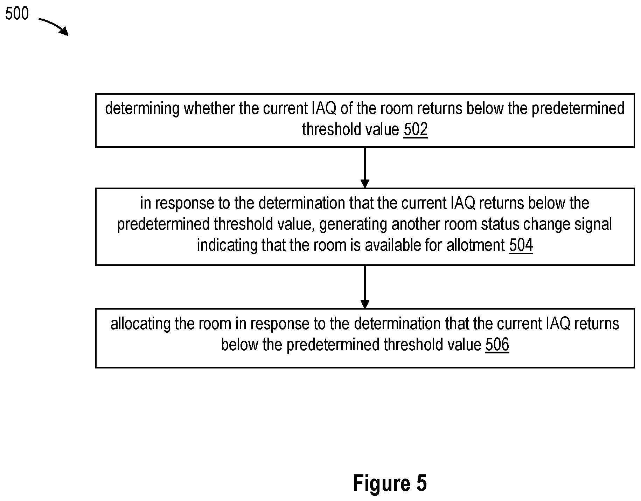

In some embodiments, the method 300 may comprise further additional steps for managing the allotment of rooms based on the IAQ of the rooms. **Figure 5** illustrates an additional process flow depicting a method 500 that, at additional step 502, comprises determining whether the current IAQ of the room returns below the predetermined threshold value.

At additional step 504, the method 500 comprises in response to the determination that the current IAQ returns below the predetermined threshold value, generating another room status change signal indicating that the room is available for allotment.

At additional step 506, the method 500 comprises allocating the room in response to the determination that the current IAQ returns below the predetermined threshold value.

While the above steps of Figures 3-5 are shown and described in a particular sequence, the steps may occur in variations to the sequence in accordance with various embodiments of the disclosure. Further, a detailed description related to the various steps of Figures 3-5 is already covered in the description related to Figures 1-2 and is omitted herein for the sake of brevity.

In some embodiments, the one or more processors 202 may be configured to execute instructions included in a computer program product. The computer program product may be embodied on a non-transitory computer readable medium. The computer program product may comprise instructions that, when executed by the one or more processors 202, cause the one or more processors 202 to detect, based on the IAQ sensor 122 located within the room 120, the current IAQ of the room, and further, allocate the room based on the current IAQ of the room 120.

In some embodiments, the instructions, when executed by one or more processors, may further cause the one or more processors 202 to determine whether the current IAQ of the room exceeds the predetermined threshold value. In some embodiments, the instructions, when executed by one or more processors 202, may further cause the one or more processors 202 to, in response to the determination that the current IAQ exceeds the predetermined threshold value, perform at least one of (a) triggering a control action for the room and (b) generating and sending a room status change signal to the allotment module 160.

In some embodiments, the instructions, when executed by one or more processors, may further cause the one or more processors 202 to perform the steps of methods described with reference to Figures 3-5.

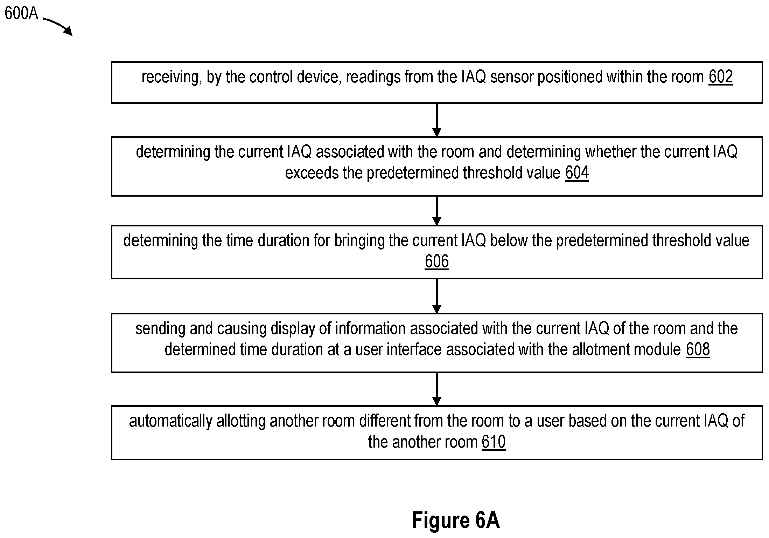

Reference is made to **Figures 6A-6C** illustrating non-limiting examples of methods for managing the allotment of rooms based on the IAQ of the rooms.

As seen in FIG. 6A, the example method 600A may comprise step 602 which includes receiving, by the control device 130, readings from the IAQ sensor 122 positioned within the room 120. The readings may be indicative of the air quality within the room 120. At step 604, the example method 600A comprises determining the current IAQ associated with the room 120, and further, determining whether the current IAQ exceeds the predetermined threshold value.

At step 606, the example method 600A comprises determining the time duration for bringing the current IAQ below the predetermined threshold value, when it is determined that the current IAQ of the room 120 exceeds the predetermined threshold value. At step 608, the example method 600A comprises sending and causing display of information associated with the current IAQ of the room 120 as well as the determined time duration at a user interface associated with the allotment module 160. The allotment staff may thus monitor the IAQ of the room 120 and track the time duration post which the room 120 may be available for allotment to a user. At step 610, the example method 600A comprises automatically allotting another room different from the room 120 to a user based on the current IAQ of the another room. As the room 120 is unsuitable for allotment to the user, the control device 130 automatically allots a different room to the user, and thus, the user need not stay in unsuitable conditions.

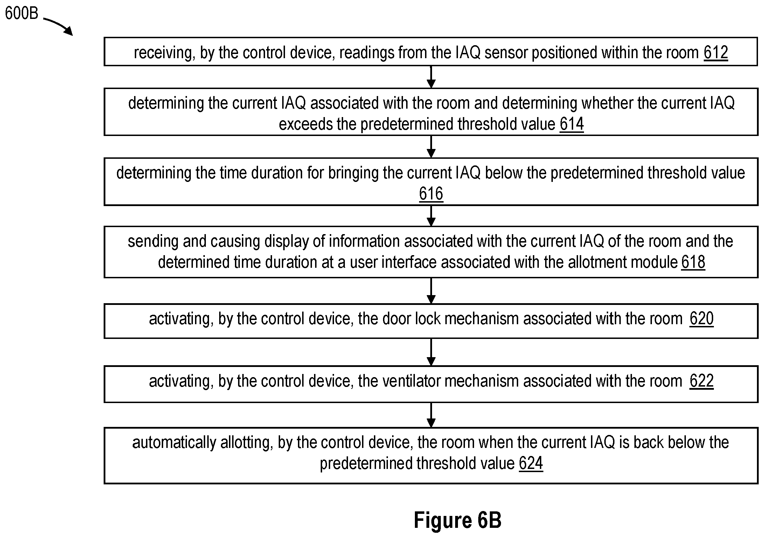

As seen in FIG. 6B, the example method 600B may comprise step 612 which includes receiving, by the control device 130, readings from the IAQ sensor 122 positioned within the room 120. The readings may be indicative of the air quality within the room 120. At step 614, the example method 600B comprises determining the current IAQ associated with the room 120, and further, determining whether the current IAQ exceeds the predetermined threshold value. At step 616, the example method 600B comprises determining the time duration for bringing the current IAQ below the predetermined threshold value, when it is determined that the current IAQ of the room 120 exceeds the predetermined threshold value. At step 618, the example method 600B comprises sending and causing display of information associated with the current IAQ of the room 120 as well as the determined time duration at a user interface associated with the allotment module 160.

At step 620, the example method 600B comprises activating, by the control device 130, the door lock mechanism 128 associated with the room 120, thereby restricting access to the room 120. Thus, in case of harmful contaminants in the room, a user or staff may be prevented from entering the room 120. At step 622, the example method 600B comprises activating, by the control device 130, the ventilator mechanism of the HVAC system 124 associated with the room 120, thereby causing the flow of fresh air in the room 120. The current IAQ of the room 120 may thus be brought back below the predetermined threshold value as the ventilation may reduce the concentration of contaminants in the room 120. A skilled person will appreciate that the steps 618-622 may occur in variations to the sequence, or may occur simultaneously, in accordance with various embodiments of the disclosure.

At step 624, the example method 600B comprises automatically allotting, by the control device 130, the room 120 when the current IAQ of the room 120 is back below the predetermined threshold value. Thus, allotment of the room 120 is prevented when the IAQ of the room is unsuitable for users and the room may be automatically allotted once the IAQ of the room is suitable.

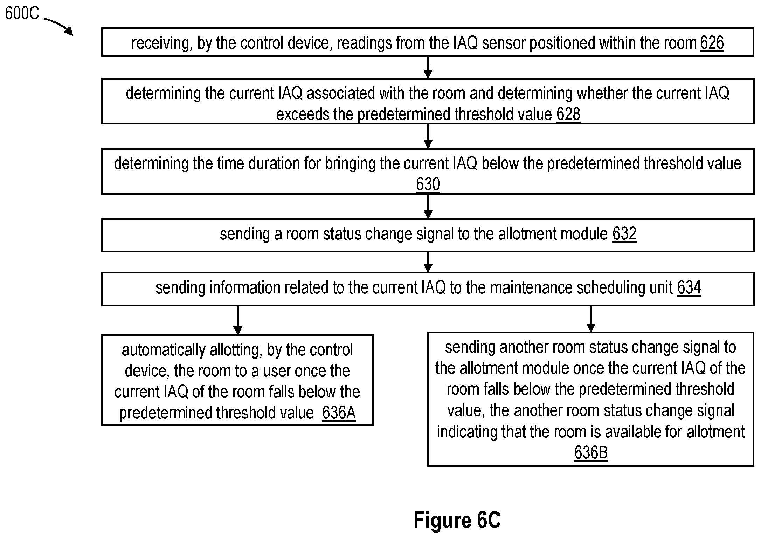

As seen in FIG. 6C, the example method 600C may comprise step 626 which includes receiving, by the control device 130, readings from the IAQ sensor 122 positioned within the room 120. The readings may be indicative of the air quality within the room 120. At step 628, the example method 600C comprises determining the current IAQ associated with the room 120, and further, determining whether the current IAQ exceeds the predetermined threshold value. At step 630, the example method 600C comprises determining the time duration for bringing the current IAQ below the predetermined threshold value, when it is determined that the current IAQ of the room 120 exceeds the predetermined threshold value.

At step 632, the example method 600C comprises sending a room status change signal to the allotment module 160, the room status change signal indicating that the room is unavailable for allotment. Based on the room status change signal, the allotment module 160 may block access for allotment of the room 120. In some embodiments, information associated with the current IAQ of the room 120 and the determined time duration may be displayed at a user interface associated with the allotment module 160.

At step 634, the example method 600C comprises sending information related to the current IAQ to the maintenance scheduling unit 162, and the maintenance scheduling unit 162 may generate a maintenance alert to one or more maintenance staff, facilitating the maintenance staff to take action to reduce the current IAQ of the room 120. Once the current IAQ of the room 120 reduces below the predetermined threshold value, the method 600C may comprise one of steps 636A or 636B.

At step 636A, the method 600C comprises automatically allotting, by the control device 130, the room to a user once the current IAQ of the room 120 falls below the predetermined threshold value. At step 636B, the example method 600C comprising sending another room status change signal to the allotment module 160 once the current IAQ of the room 120 falls below the predetermined threshold value, the another room status change signal indicating that the room is available for allotment. Based on the another room status change signal, the allotment module 160 may allow the room 120 to be allotted to a user.

The disclosure provides methods and systems for managing room allotment taking into consideration the indoor air qualities of the rooms so that the health of the users that would stay in the room is not affected. Further, in case of a deterioration of air quality in a room, corrective actions may be triggered taken to bring the air quality back to normal. Till the air quality of a particular room is unsuitable, the system may prevent allotment of the particular room to a user. Once the air quality of the particular room is normal, the system may allow allotment of the room or may automatically allot the room. Further, the system may assist staff in managing room allotments by providing the staff with information such as time duration when the air quality would be back to normal. Thus, the methods and systems ensure better customer experience and better understanding of the rooms without necessarily requiring manual visits. Moreover, no additional hardware is required for managing room allotments and the indoor area comprising the rooms would be a healthy living space.

As would be apparent to a person in the art, various working modifications may be made to the methods disclosed herein in order to implement the inventive concept as taught herein.

Moreover, the actions of any flow diagram need not be implemented in the order shown; nor do all of the acts necessarily need to be performed. Also, those acts that are not dependent on other acts may be performed in parallel with the other acts.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

While specific language has been used to describe the subject matter, any limitations arising on account thereto, are not intended. As would be apparent to a person skilled in the art, various working modifications may be made to the method in order to implement the inventive concept as taught herein. The drawings and the foregoing description give examples of embodiments. Those skilled in the art will appreciate that one or more of the described elements may well be combined into a single functional element. Alternatively, certain elements may be split into multiple functional elements. Elements from one embodiment may be added to another embodiment. The scope of the invention is as set out in the appended claims.

## Claims

1. A method (300, 400, 500, 600A, 600B, 600C) for managing allotment of rooms based on indoor air quality (IAQ), the method comprising:
detecting, based on an IAQ sensor (122) located within a room of a plurality of rooms (120), a current IAQ of the room;
determining whether the current IAQ of the room exceeds a predetermined threshold value; and
in response to the determination that the current IAQ exceeds the predetermined threshold value, performing at least one of:
triggering a control action for the room, wherein triggering the control action for the room comprises activating a door lock mechanism (128) associated with the room to restrict access to the room; and
generating and sending a room status change signal, based on the triggered control action, to an allotment module (160) configured for allocating the room.

2. The method of claim 1, wherein the room status change signal indicates that the room is unavailable for allotment.

3. The method of claim 1 or claim 2, wherein triggering the control action for the room comprises:
activating a ventilator mechanism, associated with the room, to reduce the current IAQ of the room; and/or
sending information related to the current IAQ to a maintenance scheduling unit (162) configured for generating, based on the current IAQ of the room, maintenance alert for maintenance of the room.

4. The method of any preceding claim, further comprising:
determining, based on the current IAQ, a time duration for reducing the current IAQ of the room below the predetermined threshold value; and
causing the time duration to be displayed on one or more of a user interface associated with the allotment module (160), a user interface disposed within the room, and a user interface associated with a handheld device of a user.

5. The method of any preceding claim, further comprising:
in response to the determination that the current IAQ of the room exceeds the predetermined threshold value, allocating a different room based on a current IAQ of the different room.

6. The method of any preceding claim, further comprising:
determining whether the current IAQ of the room returns below the predetermined threshold value; and
in response to the determination that the current IAQ returns below the predetermined threshold value, generating another room status change signal indicating that the room is available for allotment; and, optionally,
the method further comprising allocating the room in response to the determination that the current IAQ returns below the predetermined threshold value.

7. The method of claim 4, further comprising:
determining that the time duration for reducing the current IAQ of the room below the predetermined threshold value has lapsed; and
allocating the room in response to determining that the time duration has lapsed.

8. The method of any preceding claim, wherein detecting the current IAQ comprises:
receiving one or more sensor readings from the IAQ sensor, the one or more sensor readings related to one or more IAQ parameters, the one or more IAQ parameters comprising at least one of particulate matter, PM, volatile organic compounds, VOCs, carbon dioxide, CO2, formaldehyde, odour, and polycyclic aromatic hydrocarbons, PAHs; and
determining the current IAQ based on the one or more sensor readings.

9. The method of claim 8, wherein the one or more IAQ parameters are associated with respective parameter threshold limits, and
wherein the current IAQ is determined to exceed the predetermined threshold value responsive to at least one of the one or more of the IAQ parameters exceeding the respective parameter threshold limit.

10. A system (150) to manage allotment of rooms based on indoor air quality (IAQ), the system (150) comprising:
an IAQ sensor (122); and
a control device (130) communicatively connected with the IAQ sensor (122), the control device (130) comprising one or more processors (202) configured to:
detect, based on the IAQ sensor (122) located within a room of a plurality of rooms (120), a current IAQ of the room;
determine whether the current IAQ of the room exceeds a predetermined threshold value; and
in response to the determination that the current IAQ exceeds the predetermined threshold value, the one or more processors (202) being configured to perform at least one of:
trigger a control action for the room, wherein to trigger the control action for the room, the one or more processors (202) are configured to activate a door lock mechanism (128) associated with the room to restrict access to the room; and
generate and send a room status change signal, based on the triggered control action, to an allotment module (160) configured for allocating the room.

11. The system (150) of claim 10, wherein the room status change signal indicates that the room is unavailable for allotment.

12. The system (150) of claim 10 or 11, wherein to trigger the control action for the room, the one or more processors (202) are configured to:
activate a ventilator mechanism, associated with the room, to reduce the current IAQ of the room; and/or
send information related to the current IAQ to a maintenance scheduling unit (162) configured for generating, based on the current IAQ of the room, maintenance alert for maintenance of the room.

13. The system (150) of any of claims 10 to 12, wherein the one or more processors (202) are further configured to:
determine, based on the current IAQ, a time duration for reducing the current IAQ of the room below the predetermined threshold value; and
cause the time duration to be displayed on one or more of a user interface associated with the allotment module (160), a user interface disposed within the room, and a user interface associated with a handheld device of a user.

14. The system (150) of any of claims 10 to 13, wherein the one or more processors (202) are further configured to:
in response to the determination that the current IAQ exceeds the predetermined threshold value, allocate a different room based on the current IAQ of the different room.

15. The system (150) of any of claims 10 to 14, wherein the one or more processors (202) are further configured to:
determine whether the current IAQ of the room returns below the predetermined threshold value; and
in response to the determination that the current IAQ returns below the predetermined threshold value, generate another room status change signal indicating that the room is available for allotment.

## Patentansprüche

1. Verfahren (300, 400, 500, 600A, 600B, 600C) zum Verwalten der Zuteilung von Räumen auf Basis der Raumluftqualität (indoor air quality, IAQ), wobei das Verfahren Folgendes umfasst:
Detektieren einer aktuellen IAQ des Raums auf Basis eines IAQ-Sensors (122), der sich innerhalb eines Raums einer Vielzahl von Räumen (120) befindet;
Bestimmen, ob die aktuelle IAQ den vorgegebenen Schwellenwert überschreitet; und
als Reaktion auf die Bestimmung, dass die aktuelle IAQ den vorgegebenen Schwellenwert überschreitet, Durchführen mindestens eines von:
Auslösen einer Steuerungsmaßnahme für den Raum, wobei das Auslösen der Steuerungsmaßnahme für den Raum Aktivieren eines dem Raum zugeordneten Türverriegelungsmechanismus (128) umfasst, um den Zugang zu dem Raum einzuschränken; und
Erzeugen und Senden eines Raumbestandsänderungssignals auf Basis der ausgelösten Steuerungsmaßnahme an ein Zuteilungsmodul (160), das konfiguriert ist, um den Raum zuzuweisen.

2. Verfahren nach Anspruch 1, wobei das Raumbestandsänderungssignal angibt, dass der Raum nicht zur Zuteilung verfügbar ist.

3. Verfahren nach Anspruch 1 oder Anspruch 2, wobei das Auslösen der Steuerungsmaßnahme für den Raum Folgendes umfasst:
Aktivieren eines dem Raum zugeordneten Lüftungsmechanismus, um die aktuelle IAQ des Raums zu reduzieren; und/oder
Senden von Informationen bezüglich der aktuellen IAQ an eine Wartungsplanungseinheit (162), die konfiguriert ist, um auf Basis der aktuellen IAQ des Raums eine Wartungsmeldung für die Wartung des Raums zu erzeugen.

4. Verfahren nach einem der vorhergehenden Ansprüche, ferner umfassend:
Bestimmen einer Zeitspanne zum Reduzieren der aktuellen IAQ des Raums unter den vorgegebenen Schwellenwert auf Basis der aktuellen IAQ; und
Veranlassen, dass die Zeitdauer auf einer oder mehreren einer Benutzeroberfläche angezeigt wird, die dem Zuteilungsmodul (160) zugeordnet ist, einer Benutzeroberfläche, die sich innerhalb des Raums befindet, und einer Benutzeroberfläche, die einer Handvorrichtung eines Benutzers zugeordnet ist.

5. Verfahren nach einem der vorhergehenden Ansprüche, ferner umfassend:
als Reaktion auf die Bestimmung, dass die aktuelle IAQ des Raums den vorgegebenen Schwellenwert überschreitet, Zuweisen eines anderen Raums auf Basis einer aktuellen IAQ des anderen Raums.

6. Verfahren nach einem der vorhergehenden Ansprüche, ferner umfassend:
Bestimmen, ob die aktuelle IAQ des Raums unter den vorgegebenen Schwellenwert fällt; und
als Reaktion auf die Bestimmung, dass die aktuelle IAQ unter dem vorgegebenen Schwellenwert liegt, Erzeugen eines anderen Raumbestandsänderungssignals, das angibt, dass der Raum zur Zuteilung verfügbar ist; und optional
das Verfahren ferner das Zuweisen des Raums als Reaktion auf die Bestimmung, dass der aktuelle IAQ unter den vorgegebenen Schwellenwert fällt, umfasst.

7. Verfahren nach Anspruch 4, ferner umfassend:
Bestimmen, dass die Zeitspanne zum Reduzieren der aktuellen IAQ des Raums unter den vorgegebenen Schwellenwert abgelaufen ist; und
das Zuweisen des Raums als Reaktion darauf, dass die Zeitdauer abgelaufen ist.

8. Verfahren nach einem der vorhergehenden Ansprüche, wobei das Detektieren der aktuellen IAQ Folgendes umfasst:
Empfangen eines oder mehrerer Sensormesswerte von dem IAQ-Sensor, wobei sich der eine oder die mehreren Sensormesswerte auf einen oder mehrere IAQ-Parameter beziehen, wobei der eine oder die mehreren IAQ-Parameter mindestens einen von Feinstaub (particulate matter, PM), flüchtigen organischen Verbindungen (volatile organic compounds, VOC), Kohlendioxid (CO2), Formaldehyd, Geruch und polyzyklischen aromatischen Kohlenwasserstoffen (polycyclic aromatic hydrocarbons PAH) umfassen; und
Bestimmen der aktuellen IAQ auf Basis des einen oder der mehreren Sensormesswerte.

9. Verfahren nach Anspruch 8, wobei der eine oder die mehreren IAQ-Parameter jeweiligen Parameterschwellenwerten zugeordnet sind, und
wobei die aktuelle IAQ bestimmt ist, um den vorgegebenen Schwellenwert zu überschreiten, als Reaktion darauf, dass mindestens einer der einen oder der mehreren IAQ-Parameter den jeweiligen Parameterschwellenwert überschreitet.

10. System (150) zum Verwalten von der Zuteilung von Räumen auf der Basis der Raumluftqualität (IAQ), wobei das System (150) Folgendes umfasst:
einen IAQ-Sensor (122); und
eine Steuerungsvorrichtung (130), die kommunikativ mit dem IAQ-Sensor (122) verbunden ist, wobei die Steuerungsvorrichtung (130) einen oder mehrere Prozessoren (202) umfasst, die konfiguriert sind zum:
Detektieren einer aktuellen IAQ des Raums auf Basis des IAQ-Sensors (122), der sich innerhalb eines Raums einer Vielzahl von Räumen (120) befindet;
Bestimmen, ob die aktuelle IAQ den vorgegebenen Schwellenwert überschreitet; und
als Reaktion auf die Bestimmung, dass die aktuelle IAQ den vorgegebenen Schwellenwert überschreitet, werden der eine oder die mehrere Prozessoren (202) konfiguriert, um mindestens eines von Folgendem durchzuführen:
Auslösen einer Steuerungsmaßnahme für den Raum, wobei zum Auslösen der Steuerungsmaßnahme für den Raum der eine oder die mehrere Prozessoren (202) konfiguriert sind, um einen dem Raum zugeordneten Türverriegelungsmechanismus (128) zu aktivieren, um den Zugang zu dem Raum einzuschränken; und
Erzeugen und Senden eines Raumbestandsänderungssignals auf Basis der ausgelösten Steuerungsmaßnahme an ein Zuteilungsmodul (160), das konfiguriert ist, um den Raum zuzuweisen.

11. System (150) nach Anspruch 10, wobei das Raumbestandsänderungssignal angibt, dass der Raum nicht zur Zuteilung verfügbar ist.

12. System (150) nach Anspruch 10 oder 11, wobei zum Auslösen der Steuerungsmaßnahme für den Raum der eine oder die mehreren Prozessoren (202) konfiguriert sind zum:
Aktivieren eines dem Raum zugeordneten Lüftungsmechanismus, um die aktuelle IAQ des Raums zu reduzieren; und/oder
Senden von Informationen bezüglich der aktuellen IAQ an eine Wartungsplanungseinheit (162), die konfiguriert ist, um auf Basis der aktuellen IAQ des Raums eine Wartungsmeldung für die Wartung des Raums zu erzeugen.

13. System (150) nach einem der Ansprüche 10 bis 12, wobei der eine oder die mehreren Prozessoren (202) konfiguriert sind zum:
Bestimmen einer Zeitspanne zum Reduzieren der aktuellen IAQ des Raums unter den vorgegebenen Schwellenwert auf Basis der aktuellen IAQ; und
Veranlassen, dass die Zeitdauer auf einer oder mehreren einer Benutzeroberfläche angezeigt wird, die dem Zuteilungsmodul (160) zugeordnet ist, einer Benutzeroberfläche, die sich innerhalb des Raums befindet, und einer Benutzeroberfläche, die einer Handvorrichtung eines Benutzers zugeordnet ist.

14. System (150) nach einem der Ansprüche 10 bis 13, wobei der eine oder die mehreren Prozessoren (202) konfiguriert sind zum: als Reaktion auf die Bestimmung, dass die aktuelle IAQ den vorgegebenen Schwellenwert überschreitet, Zuweisen eines anderen Raums auf Basis der aktuellen IAQ des anderen Raums.

15. System (150) nach einem der Ansprüche 10 bis 14, wobei der eine oder die mehreren Prozessoren (202) konfiguriert sind zum:
Bestimmen, ob die aktuelle IAQ des Raums unter den vorgegebenen Schwellenwert fällt; und
als Reaktion auf die Bestimmung, dass die aktuelle IAQ unter dem vorgegebenen Schwellenwert liegt, Erzeugen eines anderen Raumbestandsänderungssignals, das angibt, dass der Raum zur Zuteilung verfügbar ist.

## Revendications

1. Procédé (300, 400, 500, 600A, 600B, 600C) de gestion d'attribution de pièces sur la base de la qualité de l'air intérieur (IAQ), le procédé comprenant :
la détection, sur la base d'un capteur IAQ (122) situé à l'intérieur d'une pièce d'une pluralité de pièces (120), d'une IAQ actuelle de la pièce ;
le fait de déterminer si l'IAQ actuelle de la pièce dépasse une valeur seuil prédéterminée ; et
en réponse à la détermination que l'IAQ actuelle dépasse la valeur seuil prédéterminée, la réalisation d'au moins l'une des actions suivantes :
le déclenchement d'une action de commande pour la pièce, dans lequel le déclenchement de l'action de commande pour la pièce comprend l'activation d'un mécanisme de verrouillage de porte (128) associé à la pièce afin de restreindre l'accès à la pièce ; et
la génération et l'envoi d'un signal de changement d'état de pièce, sur la base de l'action de commande déclenchée, à un module d'attribution (160) configuré pour attribuer la pièce.

2. Procédé selon la revendication 1, dans lequel le signal de changement d'état de pièce indique que la pièce n'est pas disponible pour attribution.

3. Procédé selon la revendication 1 ou la revendication 2, dans lequel le déclenchement de l'action de commande pour la pièce comprend :
l'activation d'un mécanisme de ventilation, associé à la pièce, afin de réduire l'IAQ actuelle de la pièce ; et/ou
l'envoi d'informations relatives à l'IAQ actuelle à une unité de planification de maintenance (162) configurée pour générer, sur la base de l'IAQ actuelle de la pièce, une alerte de maintenance pour la maintenance de la pièce.

4. Procédé selon une quelconque revendication précédente, comprenant en outre :
la détermination, sur la base de l'IAQ actuelle, d'une durée de réduction de l'IAQ actuelle de la pièce en dessous de la valeur seuil prédéterminée ; et
le fait d'amener la durée à être affichée sur une ou plusieurs d'une interface utilisateur associée au module d'attribution (160), d'une interface utilisateur disposée à l'intérieur de la pièce et d'une interface utilisateur associée à un dispositif portable d'un utilisateur.

5. Procédé selon une quelconque revendication précédente, comprenant en outre :
en réponse à la détermination que l'IAQ actuelle de la pièce dépasse la valeur seuil prédéterminée, l'attribution d'une pièce différente sur la base d'une IAQ actuelle de la pièce différente.

6. Procédé selon une quelconque revendication précédente, comprenant en outre :
le fait de déterminer si l'IAQ actuelle de la pièce redescend en dessous de la valeur seuil prédéterminée ; et
en réponse à la détermination que l'IAQ actuelle redescend en dessous de la valeur seuil prédéterminée, la génération d'un autre signal de changement d'état de pièce indiquant que la pièce est disponible pour attribution ; et, éventuellement,
le procédé comprenant en outre l'attribution de la pièce en réponse à la détermination que l'IAQ actuelle redescend en dessous de la valeur seuil prédéterminée.

7. Procédé selon la revendication 4, comprenant en outre :
la détermination que la durée de réduction de l'IAQ actuelle de la pièce en dessous de la valeur seuil prédéterminée s'est écoulée ; et
l'attribution de la pièce en réponse à la détermination que la durée s'est écoulée.

8. Procédé selon une quelconque revendication précédente, dans lequel la détection de l'IAQ actuelle comprend :
la réception d'une ou plusieurs lectures de capteur en provenance du capteur IAQ, les une ou plusieurs lectures de capteur étant relatives à un ou plusieurs paramètres IAQ, les un ou plusieurs paramètres IAQ comprenant au moins l'un des éléments suivants : matières particulaires, PM, composés organiques volatils, VOC, dioxyde de carbone, CO2, formaldéhyde, odeurs et hydrocarbures aromatiques polycycliques, PAH ; et
la détermination de l'IAQ actuelle sur la base des une ou plusieurs lectures de capteur.

9. Procédé selon la revendication 8, dans lequel les un ou plusieurs paramètres IAQ sont associés à des limites de seuil de paramètre respectives, et
dans lequel l'IAQ actuelle est déterminée comme dépassant la valeur seuil prédéterminée en réponse au fait qu'au moins l'un des un ou plusieurs des paramètres IAQ dépasse la limite de seuil de paramètre respective.

10. Système (150) de gestion d'attribution de pièces sur la base de la qualité de l'air intérieur (IAQ), le système (150) comprenant :
un capteur IAQ (122) ; et
un dispositif de commande (130) connecté en communication avec le capteur IAQ (122), le dispositif de commande (130) comprenant un ou plusieurs processeurs (202) configurés pour :
détecter, sur la base du capteur IAQ (122) situé à l'intérieur d'une pièce d'une pluralité de pièces (120), une IAQ actuelle de la pièce ;
déterminer si l'IAQ actuelle de la pièce dépasse une valeur seuil prédéterminée ; et
en réponse à la détermination que l'IAQ actuelle dépasse la valeur seuil prédéterminée, les un ou plusieurs processeurs (202) étant configurés pour réaliser au moins l'une des actions suivantes :
déclencher une action de commande pour la pièce, dans lequel pour déclencher l'action de commande pour la pièce, les un ou plusieurs processeurs (202) sont configurés pour activer un mécanisme de verrouillage de porte (128) associé à la pièce afin de restreindre l'accès à la pièce ; et
générer et envoyer un signal de changement d'état de pièce, sur la base de l'action de commande déclenchée, à un module d'attribution (160) configuré pour attribuer la pièce.

11. Système (150) selon la revendication 10, dans lequel le signal de changement d'état de pièce indique que la pièce n'est pas disponible pour attribution.

12. Système (150) selon la revendication 10 ou 11, dans lequel, pour déclencher l'action de commande pour la pièce, les un ou plusieurs processeurs (202) sont configurés pour :
activer un mécanisme de ventilation, associé à la pièce, afin de réduire l'IAQ actuelle de la pièce ; et/ou
envoyer des informations relatives à l'IAQ actuelle à une unité de planification de maintenance (162) configurée pour générer, sur la base de l'IAQ actuelle de la pièce, une alerte de maintenance pour la maintenance de la pièce.

13. Système (150) selon l'une quelconque des revendications 10 à 12, dans lequel les un ou plusieurs processeurs (202) sont en outre configurés pour :
déterminer, sur la base de l'IAQ actuelle, une durée de réduction de l'IAQ actuelle de la pièce en dessous de la valeur seuil prédéterminée ; et
amener la durée à être affichée sur une ou plusieurs d'une interface utilisateur associée au module d'attribution (160), d'une interface utilisateur disposée à l'intérieur de la pièce et d'une interface utilisateur associée à un dispositif portable d'un utilisateur.

14. Système (150) selon l'une quelconque des revendications 10 à 13, dans lequel les un ou plusieurs processeurs (202) sont en outre configurés pour :
en réponse à la détermination que l'IAQ actuelle dépasse la valeur seuil prédéterminée, attribuer une pièce différente sur la base de l'IAQ actuelle de la pièce différente.

15. Système (150) selon l'une quelconque des revendications 10 à 14, dans lequel les un ou plusieurs processeurs (202) sont en outre configurés pour :
déterminer si l'IAQ actuelle de la pièce redescend en dessous de la valeur seuil prédéterminée ; et
en réponse à la détermination que l'IAQ actuelle redescend en dessous de la valeur seuil prédéterminée, générer un autre signal de changement d'état de pièce indiquant que la pièce est disponible pour attribution.
